# EUROPÄISCHE PATENTSCHRIFT

(11) **EP 4 589 112 B1**
(45) Veröffentlichungstag und Bekanntmachung des Hinweises auf die Patenterteilung: **15.04.2026**
(21) Anmeldenummer: 25152316.3
(22) Anmeldetag: 16.01.2025
(51) Int. Cl.: E06B 9/88, H02G 11/02

(54) **BEWEGLICHE ABSPERRUNG, WIE EIN ROLLTOR ODER SEKTIONALTOR**
MOVABLE BARRIER, SUCH AS A ROLLING DOOR OR SECTIONAL DOOR
BARRIÈRE MOBILE, TELLE QU'UNE PORTE ROULANTE OU UNE PORTE SECTIONNELLE

(30) Priorität: 16.01.2024 DE 102024101120
(43) Veröffentlichungstag der Anmeldung: 23.07.2025
(60) Teilanmeldung: 26157198.8
(73) Patentinhaber: Bickl Toranlagen GmbH & Co. KG, 85664 Hohenlinden (DE)
(72) Erfinder: Bickl, Helmut, 85664 Hohenlinden (DE)
(74) Vertreter: Rothkopf, Ferdinand

(56) Entgegenhaltungen:
- DE-U- 1 984 003
- JP-A- 2000 230 383
- US-A- 4 935 585

## Beschreibung

### Hintergrund der Erfindung

Die Erfindung betrifft eine bewegliche, insbesondere verfahrbare Absperrung nach dem Oberbegriff des Anspruchs 1, wie ein Rolltor oder ein Sektionaltor, das zum Verschließen einer Öffnung einer ortsfesten Einfassung dient, wobei eine elektrische Verbindungsleitung von der ortsfesten Einfassung zu der beweglichen Absperrung geführt ist.

Bewegliche Absperrungen, wie Tore, insbesondere Rolltore oder Sektionaltore, die in der Regel kraftbetätigt sind, ansonsten aber auch manuell betätigbar sein können, dienen zum Absperren bzw. Verschließen einer in der Regel großflächigen Öffnung. Die Öffnung ist dabei mittels einer Einfassung eingefasst, die einen ortsfesten Rahmen bzw. eine Umgrenzung für die Öffnung darstellt. Während die derartige Einfassung also ortsfest ist, kann an ihr die Absperrung bewegt werden, um derartig die Öffnung zu öffnen und zu verschließen. An der beweglichen Absperrung kann es elektrische Bauteile geben, die sich mit der Absperrung mitbewegen. Um solche, sich dann bewegenden Bauteile elektrisch leitend zu kontaktieren, ist eine elektrische Verbindungsleitung zwischen der ortsfesten Einfassung und der beweglichen Absperrung notwendig.

Aus JP 2000 230383 A ist ein Rolltor als bewegliche Absperrung bekannt, mit dem eine Öffnung einer ortsfesten Einfassung verschließbar ist. Dabei ist ein Kabel als elektrische Verbindungsleitung von der ortsfesten Einfassung zu dem Rolltor geführt. Ferner ist eine Kabelrolle zum wahlweisen Auf- und Abwickeln des Kabels vorgesehen. Dabei ist das Kabel vor dem Eintritt in die Kabelrolle mittels eines Kabelführungsmittels geführt, das als eine das Kabel umgebende horizontale Platte gestaltet ist.

### Zugrundeliegende Aufgabe

Der Erfindung liegt die Aufgabe zugrunde, eine bewegliche Absperrung der gattungsgemäßen Art dahingehend weiter zu verbessern, dass sie sicherheitstechnisch im Vergleich zu herkömmlichen Absperrungen weitere Vorteile aufweist.

### Erfindungsgemäße Lösung

Diese Aufgabe ist erfindungsgemäß mit einer beweglichen Absperrung nach Anspruch 1 gelöst, wie ein Rolltor oder ein Sektionaltor, das zum Verschließen einer Öffnung einer ortsfesten Einfassung dient, wobei eine elektrische Verbindungsleitung von der ortsfesten Einfassung zu der beweglichen Absperrung geführt ist und wobei eine Trommeleinrichtung zum wahlweisen Auf- und Abwickeln der elektrischen Verbindungsleitung vorgesehen ist.

Mit der erfindungsgemäßen Lösung ist eine räumlich klar definierte Anordnung und Führung einer Verbindungsleitung an einer beweglichen Absperrung möglich, wobei dennoch ausreichend Beweglichkeit gegeben ist, dass bei allen Verfahrsituationen der beweglichen Absperrung die genannte Verbindungsleitung sicher bestehen bleibt. Zugleich ist gewährleistet, dass die Verbindungsleitung in jeder Verfahrsituation von außen nur über eine minimal Weglänge hinweg überhaupt zugänglich ist. Entsprechend ist die Gefahr einer möglichen Beschädigung der Verbindungsleitung durch Fremdeinwirkung von außen minimiert.

Bei einer vorteilhaften Weiterbildung der Erfindung ist die Trommeleinrichtung an der Einfassung ortsfest angebracht. Mit der ortsfesten Anbringung können an der Trommeleinrichtung bereitzustellende Zugkräfte von der Verbindungsleitung an die Einfassung abgeleitet werden.

Die Trommeleinrichtung ist ferner vorteilhaft in einem Bereich zwischen 1/3 und 2/3 von der Höhe der Absperrung angeordnet. Derart angeordnet ergebt sich insgesamt eine besonders kurze Verbindungsleitung, denn diese Verbindungsleitung reicht von der Trommeleinrichtung aus einmal nach unten zur beweglichen Absperrung, wenn die Öffnung geschlossen ist, und einmal nach oben zu beweglichen Absperrung, wenn die Öffnung offen ist. Die Verbindungsleitung braucht dann also nur so lang zu sein, wie etwa die Hälfte des Bewegungsweges der Absperrung ausmacht.

Darüber hinaus umfasst die Trommeleinrichtung vorzugsweise eine drehbare Trommel zum Aufnehmen der elektrischen Verbindungsleitung im aufgewickelten Zustand. Die Trommel schafft eine kompakte, bauraumsparende und zugleich knick- und bruchsichere Aufnahme für die Verbindungsleitung.

Die Trommel ist vorzugsweise in einer Aufwickel-Drehrichtung federnd vorgespannt. Die derart vorgespannte Trommel dreht sich selbsttätig, sobald dies eine Bewegung der Absperrung und damit eine Lageänderung der Verbindungsleitung zulässt.

An der Trommeleinrichtung ist erfindungsgemäß ferner mindestens ein Führungsmittel zum Führen der in die Trommeleinrichtung eintretenden oder aus der Trommeleinrichtung austretenden elektrischen Verbindungsleitung vorgesehen. Das Führungsmittel dienst insbesondere als Knickschutz für die Verbindungsleitung und ist besonders bevorzugt an einem Ausgang der Trommeleinrichtung für die Verbindungsleitung vorgesehen.

Das mindestens eine Führungsmittel ist erfindungsgemäß als eine drehbare Führungsrolle gestaltet. Die drehbare Führungsrolle führt an der Verbindungsleitung zu einer nur besonders geringen Krafteinwirkung.

Vorzugsweise sind ferner zwei Führungsmittel vorgesehen, von denen ein Führungsmittel zum Führen der elektrischen Verbindungsleitung von der Trommeleinrichtung nach oben hin und das zweite Führungsmittel zum Führen der elektrischen Verbindungsleitung von der Trommeleinrichtung nach unten hin ausgebildet ist. Die Verbindungsleitung ist so besonders einfach und betriebssicher in allen Betriebslagen der beweglichen Absperrung knicksicher geführt.

Die zwei Führungsmittel sind bevorzugt einander gegenüberliegend angeordnet, wobei zwischen den zwei Führungsmitteln ein Eingang bzw. Ausgang für die in die Trommeleinrichtung eintretende bzw. austretende elektrische Verbindungsleitung ausgebildet ist.

Schließlich ist gemäß einer weiteren vorteilhaften Weiterbildung der Erfindung an der beweglichen Absperrung eine Sicherheitsvorrichtung vorgesehen, die mittels der elektrischen Verbindungsleitung zu der Einfassung hin elektrisch kontaktiert ist. Die erfindungsgemäße Lösung ist zum Anschließen einer solchen Sicherheitsvorrichtung besonders zweckmäßig. Die Sicherheitsvorrichtung kann insbesondere als eine Sicherheitskontaktleiste am unteren Ende der beweglichen Absperrung gestaltet sein.

### Kurzbeschreibung der Zeichnungen

Nachfolgend wird ein Ausführungsbeispiel einer erfindungsgemäßen Lösung anhand der beigefügten schematischen Zeichnungen näher erläutert. Es zeigt:

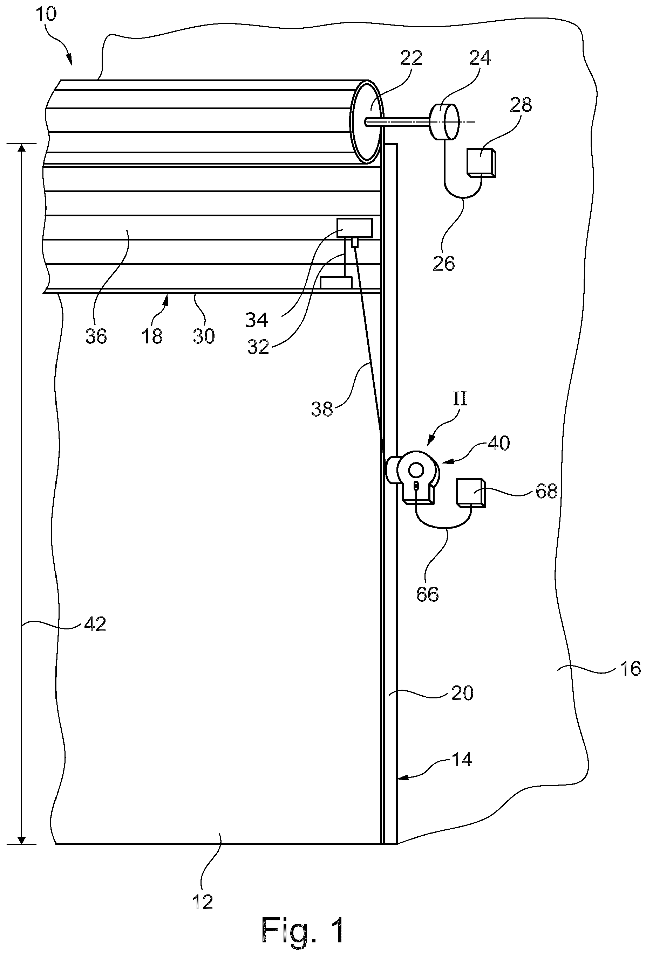

- Fig. 1: eine perspektivische Ansicht eines Ausführungsbeispiels der erfindungsgemäßen Lösung mit einer Trommeleinrichtung,

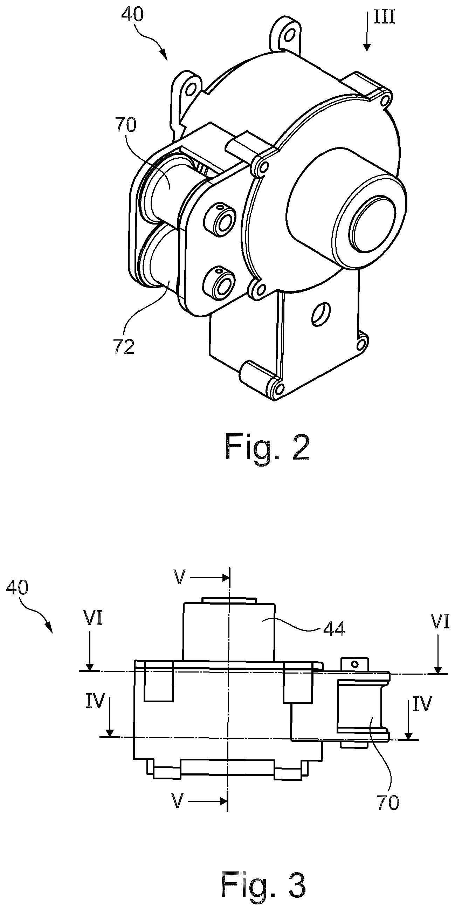

- Fig. 2: eine Trommeleinrichtung gemäß dem Detail II in Fig. 1,
- Fig. 3: die Ansicht III gemäß Fig. 2,
- Fig. 4: den Schnitt IV - IV gemäß Fig. 3,
- Fig. 5: den Schnitt V - V gemäß Fig. 3 und
- Fig. 6: den Schnitt VI - VI gemäß Fig. 3.

### Detaillierte Beschreibung des Ausführungsbeispiels

In den Fig. ist ein eine Absperrvorrichtung 10 dargestellt, bei der eine Öffnung 12 mit einer Einfassung 14 in einer Wand 16 ausgebildet ist.

Die Absperrvorrichtung 10 ist mit einer beweglichen Absperrung 18 in Form eines Rolltores 18 gestaltet, die zum einen im Wesentlichen flächig und senkrecht angeordnet ist und zum anderen entlang einer Schiene 20 senkrecht nach oben hin auf eine Rolle 22 aufgewickelt werden kann.

Die Rolle 22 kann mittels eines Rollenantriebs 24 fremkraftbetätigt gedreht werden. Der Rollenantrieb 24 ist dazu mittels einer Leitung 26 an einem ortsfesten Wandanschluss 28 elektrisch kontaktiert.

Am unteren Endbereich der beweglichen Absperrung 18 befindet sich eine Sicherheitsvorrichtung 30 in Form einer Sicherheitskontaktleiste, die mittels einer Leitung 32 zu einem ebenfalls an der beweglichen Absperrung 18 angebrachten Anschlusskasten 34 elektrisch kontaktiert ist.

Von dem Anschlusskasten 34 der beweglichen Absperrung 18 ist eine Verbindungsleitung 38 in Form eines mehradrigen Rundkabels, insbesondere mit zwischen zwei und zehn Adern, besonders bevorzugt zwischen vier und acht Adern, zu einer Trommeleinrichtung 40 geführt.

Die Trommeleinrichtung 40 ist an der Wand 16 ortsfest angebracht und zwar in einer Höhe zwischen 1/3 und 2/3 von jener Höhe 42, die die bewegliche Absperrung 18 im die Öffnung 12 verschließenden Zustand einnimmt. Die Trommeleinrichtung 40 ist besonders bevorzugt auf der Hälfte von jener Höhe 42 angebracht.

Die Trommeleinrichtung 40 weist ein Gehäuse 44 auf, in dem eine Trommel 46 an einer Achse 48 drehbar gelagert ist. Die Trommel 46 nimmt die Verbindungsleitung 40 innerhalb des Gehäuses 44 auf und ist dazu in einer Aufwickel-Drehrichtung 50 bzw. einer entgegengesetzt gerichteten Abwickel-Drehrichtung 52 zu drehen. Damit das Aufwickeln der Verbindungsleitung 40 auf der Trommel 46 selbsttätig passiert, ist die Trommel 46 mittels einer Feder 54 federnd in Richtung der Aufwickel-Drehrichtung 50 vorgespannt. Die Feder 54 ist als Spiralfeder gestaltet und in einer Federschale 56 eingesetzt, die auf die Achse 48 aufgeschoben ist. Dabei stützt sich die Feder 54 in ihrem Zentrum formschlüssig an einem in der Achse 48 ausgebildeten Schlitz 58 ab und an ihrem äußeren Randbereich formschlüssig an der Federschale 56 ab. In die Federschale 56 greift dann formschlüssig die Trommel 46 mit der darauf aufgewickelten Verbindungsleitung 38 ein.

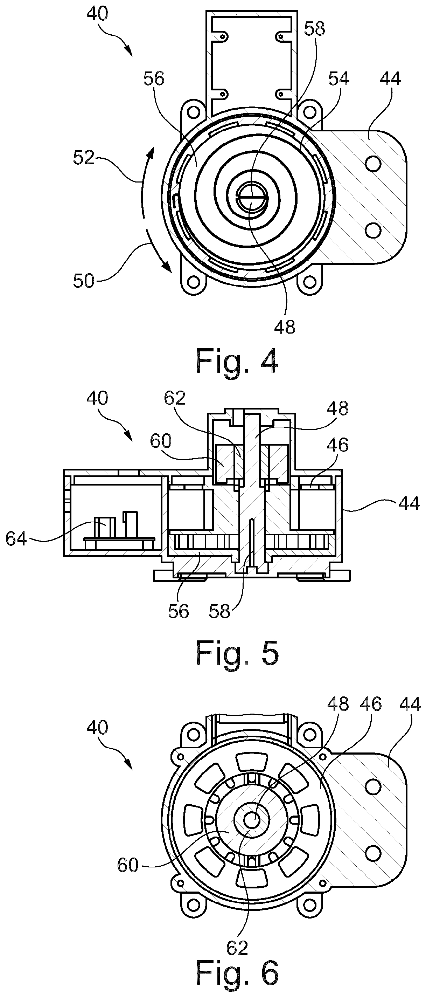

Am bezogen auf Fig. 5 oberen Endbereich der Achse 48 sind auf diese ein äußerer Kontaktring 60 und ein innerer Kontaktring 62 aufgeschoben. Der äußere Kontaktring 60 ist mit einem Ende der auf der Trommel 46 aufgewickelten Verbindungsleitung elektrisch leitend verbunden. Vom äußeren Kontaktring 60 sind ferner (nicht dargestellte) elektrische Schleifkontakte zum inneren Kontaktring 62 geführt, wobei diese elektrische Kontaktierung vom inneren Kontaktring 62 weiter zu einer seitlich neben der Trommel 46 angebrachten Platine 64 mit elektrischen Bauelementen geführt ist.

Von der Platine 64 ist eine Leitung 66 nach außen bis zu einem ortsfesten Wandanschluss 68 geführt, mittels dem die Sicherheitseinrichtung 30 schließlich insgesamt an der Wand 16 elektrisch anzuschließen ist.

### Bezugszeichenliste

- 10: Absperrvorrichtung
- 12: Öffnung
- 14: Einfassung
- 16: Wand
- 18: bewegliche Absperrung (Rolltor)
- 20: Schiene
- 22: Rolle
- 24: Rollenantrieb
- 26: Leitung
- 28: Wandanschluss Rollenantrieb
- 30: Sicherheitsvorrichtung
- 32: Leitung
- 34: Anschlusskasten am Absperrsegment
- 36: Absperrsegment
- 38: Verbindungsleitung
- 40: Trommeleinrichtung
- 42: Höhe der Absperrung
- 44: Gehäuse
- 46: Trommel
- 48: Achse
- 50: Aufwickel-Drehrichtung
- 52: Abwickel-Drehrichtung
- 54: Feder
- 56: Federschale
- 58: Schlitz
- 60: äußerer Kontaktring
- 62: innerer Kontaktring
- 64: Platine
- 66: Leitung
- 68: Wandanschluss Sicherheitseinrichtung
- 70: Führungsmittel (erste Führungsrolle)
- 72: Führungsmittel (zweite Führungsrolle)

## Patentansprüche

1. Bewegliche Absperrung (18), wie ein Rolltor oder ein Sektionaltor, das zum Verschließen einer Öffnung einer ortsfesten Einfassung (14) dient, wobei eine elektrische Verbindungsleitung (38) von der ortsfesten Einfassung (14) zu der beweglichen Absperrung (18) geführt ist und wobei eine Trommeleinrichtung (40) zum wahlweisen Auf- und Abwickeln der elektrischen Verbindungsleitung (38) vorgesehen ist,
wobei an der Trommeleinrichtung (40) mindestens ein Führungsmittel (70; 72) zum Führen der in die Trommeleinrichtung (40) eintretenden oder aus der Trommeleinrichtung (40) austretenden elektrischen Verbindungsleitung (38) vorgesehen ist,
**dadurch gekennzeichnet, dass** das mindestens eine Führungsmittel (70; 72) als eine drehbare Führungsrolle gestaltet ist.

2. Bewegliche Absperrung nach Anspruch 1,
**dadurch gekennzeichnet, dass** die Trommeleinrichtung (40) an der Einfassung (14) ortsfest angebracht ist.

3. Bewegliche Absperrung nach Anspruch 1 oder 2,
**dadurch gekennzeichnet, dass** die Trommeleinrichtung (40) in einem Bereich zwischen 1/3 und 2/3 von der Höhe (42) der Absperrung (18) angeordnet ist.

4. Bewegliche Absperrung nach einem der Ansprüche 1 bis 3,
**dadurch gekennzeichnet, dass** die Trommeleinrichtung (40) eine drehbare Trommel (46) zum Aufnehmen der elektrischen Verbindungsleitung (38) im aufgewickelten Zustand umfasst.

5. Bewegliche Absperrung nach Anspruch 4,
**dadurch gekennzeichnet, dass** die Trommel (46) in einer Aufwickel-Drehrichtung (50) federnd vorgespannt ist.

6. Bewegliche Absperrung nach einem der Ansprüche 1 bis 5,
**dadurch gekennzeichnet, dass** zwei Führungsmittel (70, 72) vorgesehen sind, von denen ein Führungsmittel (70) zum Führen der elektrischen Verbindungsleitung (38) von der Trommeleinrichtung (40) nach oben hin und das zweite Führungsmittel (72) zum Führen der elektrischen Verbindungsleitung (38) von der Trommeleinrichtung (40) nach unten hin ausgebildet ist.

7. Bewegliche Absperrung nach Anspruch 6,
**dadurch gekennzeichnet, dass** die zwei Führungsmittel (70, 72) einander gegenüberliegend angeordnet sind, wobei zwischen den zwei Führungsmitteln (70, 72) ein Eingang bzw. Ausgang für die in die Trommeleinrichtung (40) eintretende bzw. austretende elektrische Verbindungsleitung (38) ausgebildet ist.

8. Bewegliche Absperrung nach einem der Ansprüche 1 bis 7,
**dadurch gekennzeichnet, dass** an der beweglichen Absperrung (18) eine Sicherheitsvorrichtung (30) vorgesehen ist, die mittels der elektrischen Verbindungsleitung (38) zu der Einfassung (14) hin elektrisch kontaktiert ist.

## Claims

1. Movable barrier (18), such as a rolling door or a sectional door, which serves to close an opening of a stationary surround (14), wherein an electrical connecting line (38) is guided from the stationary surround (14) to the movable barrier (18) and wherein a drum device (40) is provided for the selective winding and unwinding of the electrical connecting line (38), wherein at least one guiding means (70; 72) is provided on the drum device (40) for guiding the electrical connecting line (38) entering or exiting the drum device (40),
**characterized in that** the at least one guiding means (70; 72) is designed as a rotatable guide roller.

2. Movable barrier according to claim 1,
**characterized in that** the drum device (40) is fixedly attached to the surround (14).

3. Movable barrier according to claim 1 or 2,
**characterized in that** the drum device (40) is arranged in an area between 1/3 and 2/3 of the height (42) of the barrier (18).

4. Movable barrier according to one of claims 1 to 3,
**characterized in that** the drum device (40) comprises a rotatable drum (46) for receiving the electrical connecting line (38) in the wound state.

5. Movable barrier according to claim 4,
**characterized in that** the drum (46) is resiliently biased in a winding direction of rotation (50).

6. Movable barrier according to one of claims 1 to 5,
**characterized in that** two guiding means (70, 72) are provided, of which one guiding means (70) is designed for guiding the electrical connecting line (38) from the drum device (40) upwards and the second guiding means (72) is designed for guiding the electrical connecting line (38) from the drum device (40) downwards.

7. Movable barrier according to claim 6,
**characterized in that** the two guiding means (70, 72) are arranged opposite each other, wherein an inlet or outlet for the electrical connecting line (38) entering or exiting the drum device (40) is formed between the two guiding means (70, 72).

8. Movable barrier according to one of claims 1 to 7,
**characterized in that** a safety device (30) is provided on the movable barrier (18), which is electrically contacted towards the surround (14) by means of the electrical connecting line (38).

## Revendications

1. Barrière mobile (18), telle qu'une porte roulante ou une porte sectionnelle, qui sert à fermer une ouverture d'un encadrement fixe (14), une ligne de connexion électrique (38) étant guidée de l'encadrement fixe (14) à la barrière mobile (18) et un dispositif à tambour (40) étant prévu pour l'enroulement et le déroulement sélectifs de la ligne de connexion électrique (38), au moins un moyen de guidage (70; 72) étant prévu sur le dispositif à tambour (40) pour guider la ligne de connexion électrique (38) entrant dans le dispositif à tambour (40) ou sortant du dispositif à tambour (40),
**caractérisée en ce que** le au moins un moyen de guidage (70; 72) est conçu comme un galet de guidage rotatif.

2. Barrière mobile selon la revendication 1,
**caractérisée en ce que** le dispositif à tambour (40) est monté de manière fixe sur l'encadrement (14).

3. Barrière mobile selon la revendication 1 or 2,
**caractérisée en ce que** le dispositif à tambour (40) est disposé dans une zone comprise entre 1/3 et 2/3 de la hauteur (42) de la barrière (18).

4. Barrière mobile selon l'une des revendications 1 à 3,
**caractérisée en ce que** le dispositif à tambour (40) comprend un tambour rotatif (46) pour recevoir la ligne de connexion électrique (38) à l'état enroulé.

5. Barrière mobile selon la revendication 4,
**caractérisée en ce que** le tambour (46) est précontraint par ressort dans un sens de rotation d'enroulement (50).

6. Barrière mobile selon l'une des revendications 1 à 5,
**caractérisée en ce que** deux moyens de guidage (70, 72) sont prévus, dont un premier moyen de guidage (70) est conçu pour guider la ligne de connexion électrique (38) depuis le dispositif à tambour (40) vers le haut et le second moyen de guidage (72) est conçu pour guider la ligne de connexion électrique (38) depuis le dispositif à tambour (40) vers le bas.

7. Barrière mobile selon la revendication 6,
**caractérisée en ce que** les deux moyens de guidage (70, 72) sont disposés de manière opposée l'un à l'autre, une entrée ou une sortie pour la ligne de connexion électrique (38) entrant ou sortant du dispositif à tambour (40) étant formée entre les deux moyens de guidage (70, 72).

8. Barrière mobile selon l'une des revendications 1 à 7,
**caractérisée en ce qu'**un dispositif de sécurité (30) est prévu sur la barrière mobile (18), lequel est contacté électriquement vers l'encadrement (14) au moyen de la ligne de connexion électrique (38).
